# EUROPÄISCHE PATENTSCHRIFT

(11) **EP 2 047 552 B1**
(45) Veröffentlichungstag und Bekanntmachung des Hinweises auf die Patenterteilung: **05.10.2016**
(21) Anmeldenummer: 07801500.5
(22) Anmeldetag: 02.08.2007
(51) Int. Cl.: H01M 8/06, H01M 8/00, H01M 8/04

(54) **VERFAHREN ZUR VERSORGUNG EINER BRENNSTOFFZELLE MIT WASSERSTOFF MITTELS SILANEN ODER POLYSILANEN**
PROCESS FOR SUPPLYING A FUEL CELL WITH HYDROGEN BY MEANS OF SILANES OR POLYSILANES
PROCÉDÉ D'ALIMENTATION D'UNE PILE À COMBUSTIBLE AVEC DE L'HYDROGÈNE AU MOYEN DE SILANES OU DE POLYSILANES

(30) Priorität: 03.08.2006 DE 102006036227; 25.08.2006 DE 102006039869
(43) Veröffentlichungstag der Anmeldung: 15.04.2009
(73) Patentinhaber: Spawnt Private S.à.r.l., 1148 Luxembourg (LU)
(72) Erfinder: PRETTEREBNER, Julius, 71570 Oppenweiler (DE)
(74) Vertreter: Epping - Hermann - Fischer
(86) Internationale Anmeldenummer: PCT/EP2007/006855
(87) Internationale Veröffentlichungsnummer: WO 2008/014999

(56) Entgegenhaltungen:
- EP-A- 1 514 839
- WO-A-02/066369
- WO-A-2007/019172
- WO-A-2008/000241
- WO-A2-2008/012078
- DE-A1- 10 059 625
- JP-A- S5 945 901

## Beschreibung

Die Erfindung betrifft ein Verfahren zur Versorgung einer Brennstoffzelle mit Wasserstoff wobei als Wasserstoffträger in flüssiger oder fester Form speicherbare Silane, Polysilane, Silan- oder Polysilanlösungen Verwendung finden, die durch Hydrolyse Wasserstoff abspalten. Insbesondere ist die Verwendung von Si₃H₈ als Wasserstoffspeichermaterial zur Versorgung einer Brennstoffzelle mit Wasserstoff betroffen.

Für den breiten Einsatz von Brennstoffzellen, beispielsweise in Kraftfahrzeugen, ist die Speicherung des Brennstoffs (Wasserstoffträger oder H₂) ein nach wie vor noch nicht zufrieden stellend gelöstes Problem. Zur H₂-Speicherung sind unterschiedliche Methoden bekannt:
- Druck-Speicherung von H₂ in Druckbehältern bei bis zu 700 bar;
- Drucklose Speicherung als Flüssig-H₂ in Kryobehältern bei Temperaturen unter -253°C
- Speicherung in Metallen oder Metalllegierungen, die mit H₂ thermo-reversibel Einlagerungsverbindungen (metallische Hydride) bilden;
- Speicherung in Form von wasserstoffreichen organischen Verbindungen, wie bspw. Methan, Methanol, Benzin usw., die zur Freisetzung von H₂ einer Reformierungsreaktion unterzogen werden;
- Speicherung in Form von H₂O, das mit geeigneten Metallen (z.B. Li, Na, K, Mg usw.) zu H₂ zersetzt wird;
- Speicherung in Form von salzartigen Metallhydriden (z.B. NaH, LiH usw.), die mit H₂O zu H₂ zersetzt werden;
- Speicherung in Form von komplexen Metallhydriden, bspw. LiAlH₄, NaBH₄ usw., die mit H₂O zu H₂ zersetzt werden;

Die meisten der vorgenannten Methoden sind technisch oder energetisch sehr aufwendig, erlauben nur die Speicherung einer geringen Menge an H₂ oder sind für breitere Anwendungen sicherheitstechnisch nicht beherrschbar.

Dagegen weist die zuletzt genannte H₂-Speicherung mit Hilfe von komplexen Metallhydriden das Potenzial einer technisch einfachen, sicheren und energetisch günstigen Speicherung größerer Mengen an H₂ auf.

Aus der DE 601 08 744 T2 ist ein Verfahren zur Erzeugung von Wasserstoff für eine Brennstoffzelle bekannt. Die Verfahrensschritte umfassen das Umsetzen eines Metallhydrids, das von NaAlH₄ verschieden ist, mit wenigstens einem Alkohol unter Bildung von Wasserstoff und Einspeisen des Wasserstoffs in eine Wasserstoffkammer einer Brennstoffzelle. Als besonders geeignete Hydride werden die Hydride der Metalle Li, Na, K, Mg, Ca, Zr und Ti genannt. Als besonders geeignete komplexe Hydride sind Verbindungen der Formel M2ᵥM3_{w}H_{y} aufgeführt, wobei M2 ein Metall ist, das aus der Gruppe ausgewählt ist, die aus Li, Na, K, Mg, Ca, Fe und Zr besteht; M3 aus der Gruppe ausgewählt ist, die aus Al, B, Be und Ti besteht.

Zu den Nachteilen der H₂-Speicherung mit Hilfe von Metallhydriden gehört, dass die Metallhydride oder komplexen Metallhydride in der Regel Feststoffe sind. Diese Feststoffe lassen sich nur schlecht einlagern, fördern und dosieren. Sie sind häufig unlöslich. Insbesondere in Kraftfahrzeugen stellt bereits die Betankung mit diesen Stoffen ein nicht unerhebliches Problem dar. Auch die gegebenenfalls im Kraftfahrzeug erforderliche Förderung des Metallhydrids vom Vorratstank zu einem Wasserstoffgenerator ist schwierig. Ein weiterer Nachteil ist, dass die Abbauprodukte bzw. Hydrolyseprodukte der Metallhydride zumeist stark ätzende Laugen sind, insbesondere LiOH, NaOH, KOH, Ca(OH)₂ etc. Diese Abbauprodukte sind hochkorrosiv und umweltschädlich. Da beim großtechnischen Einsatz dieser Stoffe auch immer mit unbeabsichtigter Freisetzung und damit Bildung der Abbauprodukte zu rechnen ist, sind diese Stoffe auch bedenklich hinsichtlich ihrer Umweltverträglichkeit.

Es ist daher Aufgabe der Erfindung Wasserstoffspeichermaterial mit verbesserter Handhabbarkeit hinsichtlich Lagerung Förderung und Dosierung, sowie besserer Umweltverträglichkeit bereit zu stellen sowie ein geeignetes Verfahren zur Wasserstoffbereitstellung für Brennstoffzellen aufzuzeigen.

Die Aufgabe wird erfindungsgemäß gelöst durch ein Verfahren zur Versorgung einer Brennstoffzelle mit Wasserstoff umfassend die Schritte:
- Zwischenspeichern von Mischungen von Silanen oder Silanlösungen in flüssiger Form oder Zwischenspeichern von Polysilanen in fester Form oder von Polysilanlösungen
- Überführen der Mischungen von Silane oder Silanlösungen in eine Reaktionskammer
- Umsetzung der Silane oder Silanlösungen in der Reaktionskammer mit einer wässrigen Lösung zur Freisetzung von H₂,
- Abtrennung der festen und/oder flüssigen Reaktionsprodukte von der Reaktionskammer,
- Überführung des gebildeten H₂ in die Brennstoffzelle mit den Merkmalen des Anspruchs 1 oder mit den Merkmalen des Anspruchs 2.

Erfindungsgemäß ist somit vorgesehen, dass als Speichermedium für Wasserstoff (Wasserstoffspeichermaterial) oder als Wasserstoffträger Silane oder Polysilane verwendet werden. Die Mischungen von Silanen können dabei in flüssiger beziehungsweise gelöster Form vorliegen, die Polysilane in fester oder gelöster Form. Die Silane sind binäre Verbindungen der allgemeinen Formel SiₙH₂ₙ₊₂. Es handelt sich um die Si-Analogen der Alkane.

Der Unterschied zwischen den Silanen und den Polysilanen liegt in ihrem Molekulargewicht beziehungsweise der Größe von n, wobei häufig die unter Normalbedingungen flüssigen noch als Silane, die festen als Polysilane bezeichnet werden. Im Sinne der Erfindung werden die Silane mit n bis zu etwa 20 als Silane bezeichnet, darüber wird die Bezeichnung Polysilan gewählt. Unter (Poly)Silanen sind Silane und/oder Polysilane zu verstehen.

Für die Erfindung ist es von besonderem Vorteil, wenn die (Poly)Silane in flüssiger Form mobilisiert oder mobilisierbar vorliegen. Mobilisierung wird erforderlichenfalls durch Auflösen in einem Lösungsmittel erreicht. Dies hat den Vorteil, dass eine einfache Handhabung des Wasserstoffspeichermaterials möglich ist.

Das Lösungsmittel hat den weiteren Vorteil, dass es die Reaktivität der Silane herabsetzen kann und so unerwünschte Zersetzungsreaktionen während der Speicherung unterbunden werden.

Es ist aber ebenso möglich die Polysilane als Feststoffe einzusetzen, wenn dies auch andere Fördereinrichtungen erfordert als bei den flüssigen Varianten.

Die Silane können dabei in reiner Form vorliegen. Hierunter sind im Sinne der Erfindung auch Mischungen von Silanen mit wenigen Massenanteilen an unterschiedlichen Zusatzstoffen zu verstehen. Die Silane sind Mischungen der Unterschiedlichen Vertreter der Substanzklasse der Silane.

Als Zusatzstoffe kommen insbesondere Stabilisatoren, Oxidationsschutzmittel oder Katalysatoren in Betracht.

Die Silane können auch in Lösung vorliegen, wobei hier ebenfalls die angesprochenen Zusatzstoffe zugemischt sein können. Die Verwendung von Lösungsmitteln hat den Vorteil, dass die Auswahl an geeigneten Silanen erweitert wird, die Mischbarkeit mit Zusatzstoffen verbessert wird und die Lagerung verbessert werden kann. Auch Lösungen von Polysilanen mit Silanen sind geeignete Wasserstoffspeichermaterialien.

In bevorzugter Ausgestaltung der Erfindung werden die Silane oder Silanlösungen in flüssiger Form zwischengespeichert. Als Zwischenspeicher sind insbesondere Vorratsbehälter in Kraftfahrzeugen oder Flüssigkeitstanks zu verstehen. Der Zwischenspeicher kann dabei drucklos oder unter einem leichten Überdruck betrieben werden. Ein leichter Überdruck kann zweckmäßig sein, wenn leichtflüchtigere Silane Verwendung finden. Druckbehälter stellen insbesondere bei stationären Anlagen oder Betankungsanlagen bevorzugte Ausgestaltungen dar. Bevorzugt wird der Überdruck auf 0,1 bis 1 bar begrenzt. Besonders bevorzugt steht der Zwischenspeicher aber nicht unter Druck, insbesondere für mobile Anwendungen, wie in Kraftfahrzeugen.

Die Polysilane können ebenfalls in Lösung zwischengespeichert werden.

Eine weitere Ausgestaltung sieht vor die Polysilane in fester Form zwischenzuspeichern und erst zur Überführung in die Reaktionskammer in flüssiger Form mit einem Lösungsmittel zu mobilisieren.

Es ist vorgesehen in einem nächsten Schritt, die (Poly)Silane oder deren Lösungen aus dem Zwischenspeicher in eine Reaktionskammer zu überführen. Im Gegensatz zu den Feststoff-Wasserstoffspeichern kann hier in einfacher Weise eine Trennung zwischen Speicherung und Wasserstofferzeugung durchgeführt werden. Dies ist insbesondere hinsichtlich der Abtrennung der bei der Wasserstofferzeugung anfallenden Reaktionsprodukte von besonderer Bedeutung.

Die Reaktionskammer, kann beispielsweise als kontinuierlicher Reaktor ausgestaltet sein, insbesondere als Durchflussreaktor. Das Silan oder die Silanlösung kann in eine mit der wässrigen Lösung gefüllten Reaktionskammer zudosiert werden, oder auch in der Reaktionskammer vorgelegt und das Wasser bzw. die wässrige Lösung zudosiert werden.

In der Reaktionskammer findet die Hydrolyse beziehungsweise die Umsetzung der (Poly)Silane mit einer wässrigen Lösung statt. Hierbei werden die Silane oder Polysilane unter Bildung von Kieselsäuren und der Freisetzung von H₂ hydrolysiert. Die Kieselsäuren können dabei je nach Hydrolysegrad, und pH-Wert in unterschiedlicher Form auftreten. So ist es beispielsweise möglich, mit entsprechenden Zwischenformen kolloidal gelöste Kieselsäuren oder Silica-Sole zu erhalten, oder auch festes SiO₂ zu bilden.

Bevorzugt werden basische pH-Werte eingestellt, insbesondere durch NaOH, die eine Bildung von Silica-Solen bzw. gelösten Kieselsäuren ermöglichen.

Im Falle der festen Polysilane können Zwischenspeicher und Reaktionskammer auch konstruktiv zusammengelegt werden. Dies bedeutet, dass die wässrige Lösung über bzw. durch das Polysilan geführt wird und sich Wasserstoff und die Reaktionsprodukte bilden. Die Reaktionsprodukte werden daraufhin zweckmäßigerweise als kolloidal gelöste Kieselsäuren oder Silica-Sole in flüssiger Form von den in Wasser unlöslichen Polysilanen abgetrennt und aus der Reaktionskammer/Zwischenspeicher ausgewaschen.

Im nächsten Schritt erfolgt die Abtrennung der festen und/oder flüssigen Reaktionsprodukte von der Reaktionskammer.

Bei dem erfindungsgemäßen Verfahren ist es von besonderer Bedeutung, dass sich die gebildeten Hydrolyseprodukte in einfacher Weise aus dem System abtrennen lassen. Es gestaltet sich insbesondere gegenüber den festen Wasserstoffspeichermaterialien als besonders einfach. Fällt die gebildete Kieselsäure als kolloidale Lösung an, so kann diese beispielsweise in einem Überschuss an Reaktions-Wasser aus der Reaktionskammer ausgetragen werden. Dies erfolgt besonders einfach in einem Durchflussreaktor. Auch die feste Kieselsäure kann durch Wasser aus der Reaktionskammer gespült werden. Gegebenenfalls ist es aber auch zweckmäßig, die festen Reaktionsprodukte mechanisch zu entfernen.

Die Abtrennung der Kieselsäure von festem Polysilan erfolgt bevorzugt durch Ausspülen mit basischer wässriger Lösung.

Der gebildete Wasserstoff wird in die Brennstoffzelle bzw. in die Brennstoffzelleneinheit überführt.

Typischerweise werden die Silane oder (Poly)Silanlösungen in flüssiger Form in die Reaktionskammer überführt.

In einer weiteren Variante ist vorgesehen, die Silane beziehungsweise einen Teil der Silane unmittelbar vor oder in der Reaktionskammer zum Verdampfen zu bringen. Gegebenenfalls ist ein Verdampfer zwischen Reaktionskammer und Zwischenspeicher vorzusehen. Die Verdampfung ist insbesondere dann zweckmäßig, wenn leichtflüchtigere Silane verwendet werden. Die bei der Hydrolyse der Silane freiwerdende Reaktionsenergie kann vorteilhafterweise zur Verdampfung der Silane genutzt werden.

Bevorzugt werden die Silane ausgewählt aus linearen oder verzweigen Silanen der allgemeinen Formel SiₙH₂ₙ₊₂ wobei n= 1, 2, 3, 4, 5, 6, 7 oder 8 ist.

Das Si₃H₈ und das n- oder i-S₄H₁₀ sind bei Raumtemperatur flüssig und eigenen sich daher besonders gut, in reiner Form, insbesondere mit Beimischungen von Stabilisatoren eingesetzt zu werden. Die Beimengung von Stabilisatoren gegen Oxidation und Hydrolyse bei der Lagerung ist dabei zweckmäßig.

Bevorzugt werden bei Raumtemperatur flüssige Silane als Wasserstoffspeichermaterial zur Versorgung einer Brennstoffzelle mit Wasserstoff verwendet.

Besonders bevorzugt wird Si₃H₈ als Wasserstoffspeichermaterial zur Versorgung einer Brennstoffzelle mit Wasserstoff verwendet.

Bevorzugte Mischungen reiner Silane besteht aus Si₃H₈ und n-oder i-S₄H₁₀ im Mengenverhältnis 1:1 bis 1:20.

Das Si₂H₆ hat einen Siedepunkt von -14°C und muss bei Verwendung in reiner Form unter einem leichten Überdruck gehalten werden. Es eignet sich aber auch als Nebenbestandteil in einer Silanmischung bzw. einer Silanlösung mit schwereren Homologen Silanen. Hierbei wirkt es als Verdünner bzw. Verflüssiger.

Weitere bevorzugte Mischungen reiner Silane bestehen aus Si₂H₆, Si₃H₈ und n- oder i-S₄H₁₀ im Mengenverhältnis 0,5:1:1 bis 0,5:1:50.

Die höheren Homologen der Silane mit n > 4 sind in reiner Form zunehmend chemisch instabil. Sie werden daher bevorzugt in Lösung und mit Zusätzen an Stabilisatoren verwendet. Es kann auch zweckmäßig sein, höhere Silane mit n > 4 als Nebenbestandteil zu niederen Silanen in reiner Form oder besonders bevorzugt in deren Lösung zu verwenden.

Unter den Polysilanen werden diejenigen mit Polymerisationsgraden n > 100 bevorzugt. Besonders bevorzugt liegt n im Mittel oberhalb 500.

Wird eine Silanlösung oder Polysilanlösung verwendet, so ist diese bevorzugt im Wesentlichen aus (Poly)Silanen und einer Trägerflüssigkeit aus aprotischen organischen Lösungsmitteln aufgebaut. Die organischen Lösungsmittel bestehen bevorzugt aus Mineralölen, und/oder Alkanen mit 6 bis 14 C-Atomen. Es sind auch cyclische Ether geeignet.

Die zur Umsetzung der (Poly)Silane eingesetzten wässrigen Lösungen umfassen reines Wasser oder Wasser mit Zusatzstoffen. Eine wichtige Klasse an Zusatzstoffen stellen niedere Alkohole dar. Auch die Alkohole sind zur Spaltung der Si-H-Bindungen und Freisetzung von Wasserstoff geeignet. Gegenüber dem Wasser ist die Reaktivität der Alkohole und die freigesetzte Reaktionswärme geringer. Über Mischungen aus H₂O und Alkoholen lässt sich die Reaktion in der Reaktionskammer erforderlichenfalls besser kontrollieren. Bevorzugt sind niedere Alkohole, C1- bis C3-Alkohole, insbesondere Methanol und Ethanol.

Als weitere Zuschlagstoffe in der wässrigen Lösung sind Mineralsäuren oder Alkalien zu nennen, um den pH-Wert im Reaktor auf sauer oder basisch einzustellen. Sie wirken katalytisch auf die Hydrolyse der (Poly)Silane ein. Bevorzugt werden alkalische Bedingungen eingestellt, beispielsweise durch Verwendung von Natronlauge. Hierdurch wird die Reaktivität der Silane erhöht und die Löslichkeit der bei der Hydrolyse gebildeten Kieselsäure verbessert sowie die Bildung eines flüssigen Silicasols unterstützt.

Es kann aber auch zweckmäßig sein, saure Bedingungen einzustellen um feste Kieselsäure beziehungsweise festes SiO₂ aus dem wässrigen Medium auszufällen. Dieser Feststoff kann dann durch Filtereinheiten aus dem System entfernt werden.

In der Reaktionskammer können auch weitere Katalysatoren angeordnet sein. Hierbei sind Metallkatalysatoren bevorzugt; beispielsweise Stahlwolle.

Ein weiterer Aspekt der Erfindung betrifft einen Wasserstoffgenerator für Brennstoffzellen umfassend:
- einen Zwischenspeicher für flüssige Silane, Silanlösungen oder Polysilanlösungen
- einen Zwischenspeicher für eine wässrige Lösung
- eine Reaktionskammer in die mindestens zwei Flüssigkeits-Zuleitungen aus den beiden Zwischenspeichern führen
- eine Separator-Vorrichtung zur Abtrennung des H₂-Gases von den festen und/oder flüssigen Reaktionsprodukten.

Bevorzugt enthält die Reaktionskammer eine Mischvorrichtung für flüssiges Silan oder Silanlösung mit der wässrigen Lösung.

Eine weitere bevorzugte Ausgestaltung der Reaktionskammer ist ein Durchflussreaktor bei dem die Silane oder die Silanlösung in die wässrige Lösung eingeleitet und durchmischt werden.

Eine bevorzugte Ausgestaltung des Wasserstoffgenerators, sieht vor, das bei der Brennstoffzellenreaktion gebildete Wasser in den Zwischenspeicher der wässrigen Lösung oder auch direkt in die Reaktionskammer zurück zu führen. Hierdurch wird es möglich, die Menge des zwischengespeicherten Wassers zu reduzieren, da das währen dem Betrieb der Brennstoffzelle erzeugte Abwasser zur Hydrolyse der (Poly)Silane genutzt wird. Ein weiterer Vorteil der Nutzung des Abwassers liegt darin, dass das bei der Brennstoffzellenreaktion anfallende Wasser häufig als Dampf oder Heißwasser anfällt und die Reaktion der Hydrolyse in der Reaktionskammer auf hohem Temperaturniveau durchgeführt werden kann , ohne eine Heizung des Hydrolysewassers vornehmen zu müssen.

Der Zwischenspeicher und/oder die Reaktionskammer ist dabei über Zuleitungen mit dem Abgassystem der Brennstoffzelle verbunden.

## Patentansprüche

1. Verfahren zur Versorgung einer Brennstoffzelle mit Wasserstoff umfassend die Schritte:
- Zwischenspeichern von Mischungen von Silanen oder Silanlösungen in flüssiger Form oder
- Zwischenspeichern von Polysilanen in fester Form oder von Polysilanlösungen
- Überführen der Mischungen von Silanen oder Silanlösungen oder der Polysilane oder Polysilanlösungen in eine Reaktionskammer
- Umsetzung der Silane oder Polysilane in der Reaktionskammer mit einer wässrigen Lösung oder Wasserdampf zur Freisetzung von H₂,
- Abtrennung der festen und/oder flüssigen Reaktionsprodukte von der Reaktionskammer,
- Überführung des gebildeten H₂ in die Brennstoffzelle, **dadurch gekennzeichnet, dass** die Umsetzung der Silane und/oder Polysilane bei Temperaturen oberhalb 80 °C erfolgt.

2. Verfahren zur Versorgung einer Brennstoffzelle mit Wasserstoff umfassend die Schritte:
- Zwischenspeichern von Mischungen von Silanen oder Silanlösungen in flüssiger Form oder
- Zwischenspeichern von Polysilanen in fester Form oder von Polysilanlösungen
- Überführen der Mischungen von Silanen oder Silanlösungen oder der Polysilane oder Polysilanlösungen in eine Reaktionskammer
- Umsetzung der Silane oder Polysilane in der Reaktionskammer mit einer wässrigen Lösung oder Wasserdampf zur Freisetzung von H₂,
- Abtrennung der festen und/oder flüssigen Reaktionsprodukte von der Reaktionskammer,
- Überführung des gebildeten H₂ in die Brennstoffzelle **dadurch gekennzeichnet, dass** die wässrige Lösung auf einen basischen pH-Wert eingestellt wird.

3. Verfahren nach Anspruch 2 **dadurch gekennzeichnet, dass** die Mischungen von Silanen oder Silanlösungen in flüssiger Form in die Reaktionskammer überführt werden.

4. Verfahren nach Anspruch 2 **dadurch gekennzeichnet, dass** die festen Polysilane vor oder zum Überführen in die Reaktionskammer gelöst werden.

5. Verfahren nach Anspruch 1, **dadurch gekennzeichnet, dass** die Silane zumindest teilweise unmittelbar vor oder in der Reaktionskammer zum Verdampfen gebracht werden.

6. Verfahren nach einem der vorangegangenen Ansprüche,
**dadurch gekennzeichnet, dass** die Silane ausgewählt sind aus linearen oder verzweigen Silanen der allgemeinen Formel SiₙH₂ₙ₊₂ wobei n= 1 bis 8.

7. Verfahren nach einem der vorangegangenen Ansprüche,
**dadurch gekennzeichnet, dass** die Polysilane ausgewählt sind aus linearen oder verzweigen Silanen der allgemeinen Formel SiₙH₂ₙ₊₂ wobei n im Mittel oberhalb 100 liegt.

8. Verfahren nach einem der vorangegangenen Ansprüche,
**dadurch gekennzeichnet, dass** die Silanlösung oder Polysilanlösung aus Silanen und/oder Polysilanen und
einer Trägerflüssigkeit aus aprotischen organischen Lösungsmitteln aufgebaut wird.

9. Verfahren nach Anspruch 8, **dadurch gekennzeichnet, dass** die organischen Lösungsmittel ausgewählt sind aus Mineralölen und/oder Alkanen mit 6 bis 14 C-Atomen.

10. Verfahren nach einem der vorangegangenen Ansprüche,
**dadurch gekennzeichnet, dass** die Silane oder Polysilane in einem Durchflussreaktor als Reaktionskammer kontinuierlich umgesetzt werden.

11. Verfahren nach einem der vorangegangenen Ansprüche,
**dadurch gekennzeichnet, dass** die Umsetzung der Silane und/oder Polysilane in Gegenwart eines MetallKatalysators, insbesondere Stahlwolle, erfolgt.

12. Verfahren nach einem der vorangegangenen Ansprüche,
**dadurch gekennzeichnet, dass** das Silan, Polysilan, Silanlösung und/oder Polysilanlösung in eine mit der wässrigen Lösung gefüllte Reaktionskammer zudosiert wird.

13. Verfahren nach einem der vorangegangenen Ansprüche,
**dadurch gekennzeichnet, dass** die wässrige Lösung aus Wasser oder Wasser mit niederen C1- bis C3-Alkoholen ausgewählt wird.

14. Verfahren nach einem der vorangegangenen Ansprüche,
**dadurch gekennzeichnet, dass** das Reaktionswasser der Brennstoffzelle zumindest teilweise in die wässrige Lösung zur Umsetzung mit den Silanen oder Polysilanen zurückgeführt wird.

15. Verfahren nach einem der vorangegangenen Ansprüche,
**dadurch gekennzeichnet, dass** die Abtrennung der festen und/oder flüssigen Reaktionsprodukte als kolloidale Lösung oder Suspension in wässriger Lösung erfolgt.

## Claims

1. Method for supplying a fuel cell with hydrogen, comprising the steps:
- intermediate storage of mixtures of silanes or silane solutions in liquid form, or
- intermediate storage of polysilanes in solid form or of polysilane solutions
- transferring said mixtures of silanes or silane solutions or of said polysilanes or polysilane solutions into a reaction chamber
- reacting the silanes or polysilanes in the reaction chamber with an aqueous solution or water steam for the release of H₂,
- removing the solid and/or liquid reaction products from the reaction chamber,
- transferring the produced H₂ into the fuel cell, **characterized in that** the reaction of the silanes and/or polysilanes is effected at temperatures above 80 °C.

2. Method for supplying a fuel cell with hydrogen, comprising the steps:
- intermediate storage of mixtures of silanes or silane solutions in liquid form, or
- intermediate storage of polysilanes in solid form or of polysilane solutions
- transferring said mixtures of silanes or silane solutions or of said polysilanes or polysilane solutions into a reaction chamber
- reacting the silanes or polysilanes in the reaction chamber with an aqueous solution or water steam for releasing H₂,
- removing the solid and/or liquid reaction products from the reaction chamber,
- transferring the produced H₂ into the fuel cell, **characterized in that** the aqueous solution is set to a basic pH-value.

3. Method according to claim 2, **characterized in that** the mixtures of silane or silane solutions are transferred into the reaction chamber in liquid form.

4. Method according to claim 2, **characterized in that** the solid polysilanes are dissolved prior to or for the transfer into the reaction chamber.

5. Method according to claim 1, **characterized in that** the silanes are at least partially caused to evaporate directly before or in the reaction chamber.

6. Method according to one of the preceding claims, **characterized in that** the silanes are selected from linear or branched silanes of the general formula SiₙH₂ₙ₊₂, where n = 1 to 8.

7. Method according to one of the preceding claims, **characterized in that** the polysilanes are selected from linear or branched silanes of the general formula SiₙH₂ₙ₊₂, where n is above 100 on average.

8. Method according to one of the preceding claims, **characterized in that** the silane solution or the polysilane solution is composed of silanes and/or polysilanes and a carrier liquid of aprotic organic solvents.

9. Method according to claim 8, **characterized in that** the organic solvents are selected from mineral oils and/or alkanes with 6 to 14 carbon atoms.

10. Method according to one of the preceding claims, **characterized in that** the silanes or polysilanes are continuously reacted in a flow reactor as reaction chamber.

11. Method according to one of the preceding claims, **characterized in that** the reaction of the silanes and/or polysilanes ensues in the presence of a metal catalyst, in particular steel wool.

12. Method according to one of the preceding claims, **characterized in that** the silane, polysilane, silane solution and/or polysilane solution is dosed into a reaction chamber filled with the aqueous solution.

13. Method according to one of the preceding claims, **characterized in that** the aqueous solution is selected from water or water with low C1 to C3 alcohols.

14. Method according to one of the preceding claims, **characterized in that** the reaction water of the fuel cell is at least partially returned into the aqueous solution for the reaction with the silanes or polysilanes.

15. Method according to one of the preceding claims, **characterized in that** separation of the solid and/or liquid reaction products ensues as colloidal solution or suspension in aqueous solution.

## Revendications

1. Procédé en vue de l'alimentation d'une cellule de combustible en hydrogène, comportant les étapes de :
- Stockage intermédiaire des mélanges de silanes ou des solutions de silane sous forme liquide ou
- Stockage intermédiaire des polysilanes sous forme solide ou des solutions de polysilanes
- Transport des mélanges de silanes ou des solutions de silane ou des polysilanes ou des solutions de polysilanes dans une chambre de réaction
- Faire réagir des silanes ou des polysilanes dans la chambre de réaction avec une solution aqueuse ou de la vapeur d'eau en vue de libération de H₂,
- Séparation des produits de réaction solides et/ou liquides de la chambre de réaction,
- Introduction du H₂ constitué dans la cellule de combustible, **caractérisé en ce que** la réaction des silanes et/ou des polysilanes s'effectue à des températures supérieures à 80 °C.

2. Procédé en vue de l'alimentation d'une cellule de combustible en hydrogène, comportant les étapes de :
- Stockage intermédiaire des mélanges de silanes ou des solutions de silane sous forme liquide ou
- Stockage intermédiaire des polysilanes sous forme solide ou des solutions de polysilanes
- Transport des mélanges de silanes ou des solutions de silane ou des polysilanes ou des solutions de polysilanes dans une chambre de réaction
- Faire réagir des silanes ou des polysilanes dans la chambre de réaction avec une solution aqueuse ou de la vapeur d'eau en vue de libération de H₂,
- Séparation des produits de réaction solides et/ou liquides de la chambre de réaction,
- Introduction du H₂ constitué dans la cellule de combustible, **caractérisé en ce que** la solution aqueuse est ajustée sur une valeur de pH basique.

3. Procédé selon la revendication 2, **caractérisé en ce que** les mélanges de silanes ou les solutions de silane sont introduites sous forme liquide dans la chambre de réaction.

4. Procédé selon la revendication 2, **caractérisé en ce que** les polysilanes solides sont dissous avant ou en vue du introduction dans la chambre de réaction.

5. Procédé selon la revendication 1, **caractérisé en ce que** les silanes sont mis à évaporer au moins partiellement directement devant ou dans la chambre de réaction.

6. Procédé selon une quelconque des revendications précédentes, **caractérisé en ce que** les silanes sont sélectionnés à partir des silanes linéaires ou ramifiés de la formule générale SiₙH₂ₙ₊₂, dans lequel n = 1 à 8.

7. Procédé selon une quelconque des revendications précédentes, **caractérisé en ce que** les polysilanes sont sélectionnés à partir des silanes linéaires ou ramifiés de la formule générale SiₙH₂ₙ₊₂, dans lequel n se trouve en moyenne au-dessus de 100.

8. Procédé selon une quelconque des revendications précédentes, **caractérisé en ce que** la solution de silane ou la solution de polysilane est constituée de silanes et/ou de polysilanes et d'un liquide porteur issu de solvants organiques aprotiques.

9. Procédé selon la revendication 8, **caractérisé en ce que** les solvants organiques sont sélectionnés à partir des huiles minérales et/ou des alcanes avec 6 à 14 atomes de C.

10. Procédé selon une quelconque des revendications précédentes, **caractérisé en ce que** les silanes ou les polysilanes sont réagis en continu dans un réacteur à passage comme chambre de réaction.

11. Procédé selon une quelconque des revendications précédentes, **caractérisé en ce que** la réaction des silanes et/ou des polysilanes s'effectue en présence d'un catalyseur métallique, notamment de la laine d'acier.

12. Procédé selon une quelconque des revendications précédentes, **caractérisé en ce que** le silane, le polysilane, la solution de silane et/ou la solution de polysilane sont dosés dans une chambre de réaction remplie de la solution aqueuse.

13. Procédé selon une quelconque des revendications précédentes, **caractérisé en ce que** la solution aqueuse est sélectionnée à partir de l'eau ou de l'eau avec des alcools inférieurs de C1 à C3.

14. Procédé selon une quelconque des revendications précédentes, **caractérisé en ce que** l'eau de réaction de la cellule de combustible est ramenée au moins partiellement dans la solution aqueuse en vue de la réaction avec les silanes ou les polysilanes.

15. Procédé selon une quelconque des revendications précédentes, **caractérisé en ce que** la séparation des produits de réaction solides et/ou liquides s'effectue comme solution colloïdale ou comme suspension dans une solution aqueuse.
